# EUROPEAN PATENT APPLICATION

(11) **EP 2 253 593 A1**
(43) Date of publication of application: **24.11.2010**
(21) Application number: 09160011.4
(22) Date of filing: 12.05.2009
(51) Int. Cl.: C02F 1/469

(54) **Apparatus and method for removal of ions**

(71) Applicant: Voltea B.V., 3013 AL Rotterdam (NL)
(72) Inventor: van der Wal, Bert, 2333 AL Leiden (NL); Reinhoudt, Hank Robert, 2333 AL Leiden (NL); Palmer, Timothy John, Cambridgeshire, Cambridgeshire CB7 5AW (GB)
(74) Representative: Fluit, Jeroen

(57) **Abstract**

The invention relates to an apparatus for removal of ions. The apparatus being provided with a housing (1,3,5). The housing having:
a water inlet (7) for letting water in the housing;
a water outlet (9) for letting water out of the housing;
a first electrode (13) comprising a first current collector (14) with a substantially metal free high surface area layer;
a second electrode (15); and,
a spacer (11) for separating the first electrodes from the second electrodes and allowing water to flow in between the first and second electrodes (13,15). The apparatus has a first metal connector (17) connecting to the first current collector (14) outside the housing.

## Description

### Field of the invention

The invention relates to an apparatus for removal of ions, the apparatus being provided with a housing comprising:
a water inlet for letting water in the housing;
a water outlet for letting water out of the housing;
a first electrode comprising a first current collector with a substantially metal free high surface area layer;
a second electrode;
a spacer for separating the first electrode from the second electrode and allowing water to flow in between the first and second electrode; and,
a first metal connector connected to the first current collector.

### Background prior art

In recent years one has become increasingly aware of the impact of human activities on the environment and the negative consequences this may have. Ways to reduce, reuse and recycle resources are becoming more important. In particular, clean water is becoming a scarce commodity. Therefore, various methods and devices for purifying water have been published.

A method for water purification is by capacitive deionisation, using an apparatus provided with a flow through capacitor (FTC) for removal of ions in water. The FTC functions as an electrically regenerable cell for capacitive deionisation. By charging electrodes, ions are removed from an electrolyte and are held in an electric double layers at the electrodes. The electrodes can be (partially) electrically regenerated to desorb such previously removed ions without added chemicals.

The apparatus for removal of ions comprises one or more pairs of spaced apart electrodes (a cathode and an anode) and a spacer, separating the electrodes and allowing water to flow between the electrodes. The electrodes are provided with current collectors or backing layers that are generally adjacent to or very near the electrodes. Current collectors are electrically conductive and transport charge in and out of the rest of the electrodes.

The apparatus is provided with a housing comprising a water inlet for letting water in the housing and a water outlet for letting water out of the housing. In the housing of the apparatus for removal of ions the layers of electrodes and spacers are stacked in a "sandwich" fashion by compressive force, normally by mechanical fastening.

A charge barrier may be placed adjacent to an electrode of a flow-through capacitor. The term charge barrier refers to a layer of material which is permeable or semi-permeable and is capable of holding an electric charge. Ions are retained or trapped, on the side of the charge barrier towards which the like-charged ions migrate. A charge barrier may allow an increase in ionic efficiency, which in turn allows energy efficient ion removal.

A problem with the apparatus for removal of ions is that the efficiency may deteriorate.

It is an object of the invention to provide an apparatus for removal of ions with improved efficiency.

### Summary of the invention

Accordingly, the present invention provides an apparatus for removal of ions, the apparatus being provided with a housing comprising:
a water inlet for letting water in the housing;
a water outlet for letting water out of the housing;
a first electrode comprising a first current collector with a substantially metal free high surface area layer;
a second electrode;
a spacer for separating the first electrode from the second electrode and allowing water to flow in between the first and second electrode; and,
a first metal connector connected to the first current collector, wherein the first current collector is fed through the housing to connect to the first metal connector outside the housing.

The connection with metal to the electrode outside the housing makes it possible to improve the efficiency of removal of ions.

The invention further relates to a method for removal of ions the method comprising:
providing at least one of a first and a second electrode in a housing, the first electrode comprising a first current collector with a substantially metal free high surface area layer;
allowing water to enter the housing via the water inlet; and,
allowing the water to flow in between the first and second electrodes to a water outlet; and, connecting said one of the first and second electrode via a metal connector outside the housing to a power source so as to charge the electrodes.

By connecting said one of the first and second electrode via metal outside the housing the efficiency of removal of ions is improved.

The invention further relates to an apparatus for removal of ions, the apparatus being provided with a housing comprising:
a water inlet for letting water in the housing;
a water outlet for letting water out of the housing;
a first electrode;
a second electrode;
a spacer for separating the first electrode from the second electrode and allowing water to flow in between the first and second electrode; and,
a first metal connector connecting to the first electrode, wherein the interior of the housing is substantially metal free.

By keeping the interior of the housing substantially metal free the efficiency of the removal of ions is improved.

These and other aspects, features and advantages will become apparent to those of ordinary skill in the art from reading the following detailed description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Similarly, all percentages are weight/weight percentages unless otherwise indicated. Numerical ranges expressed in the format "from x to y" are understood to include x and y. When for a specific feature multiple preferred ranges are described in the format "from x to y", it is understood that all ranges combining the different endpoints are also contemplated.

### Brief description of the figures

Embodiments of the invention will be described, by way of example only, with reference to the accompanying schematic drawings in which corresponding reference symbols indicate corresponding parts, and in which:
Figure 1 shows a schematic cross-section of an apparatus for removal of ions according to the invention;
Figure 2 discloses a cross section along the line A-A of the apparatus of figure 1;
Figure 3 discloses a three dimensional figure of an apparatus for removal of ions according to the invention; and,
Figure 4 discloses removal of ions according to the invention.

### Detailed description of the invention

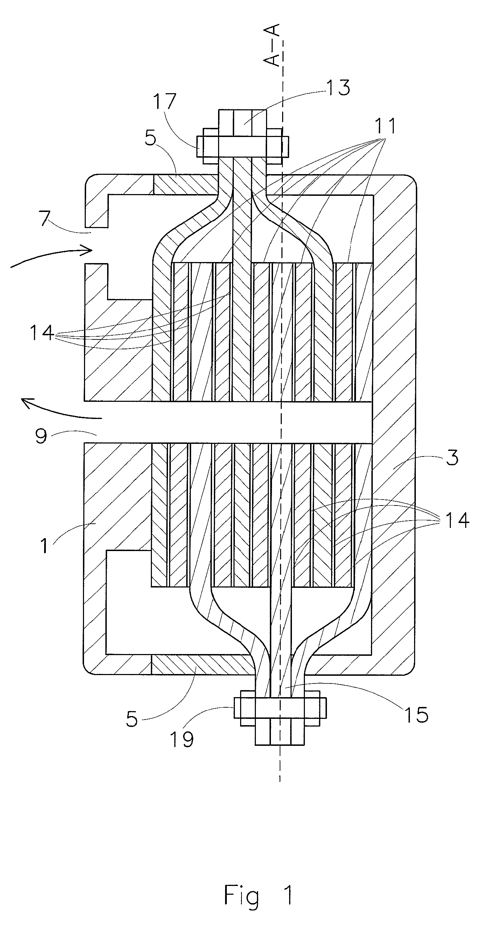

Figure 1 shows a schematic cross-section of an apparatus for removal of ions according to the invention. The apparatus has a housing comprising a first housing part 1 and a second housing part 3 made of a relatively hard material e.g. a hard plastic. A third housing part 5 is made of a relatively soft material e.g. rubber, filler or glue. By pressing the first, second and third housing parts on each other, for example with a bold and nut (not shown) the housing is made water tight. Alternatively it is possible to provide the electrodes through a hole in the housing and use a glue to make the connection between the housing and the electrode water tight.

The housing is provided with a water inlet 7 and a water outlet 9. During ion removal of the water, the water will flow from the inlet 7 to the outlet 9 through the spacers 11 which separates the first electrode 13 and the second electrode 15 from each other. The electrodes are clamped within the housing to provide a water leakage free apparatus. By creating a electrical potential difference between the first and second electrode, for example by connecting a positive voltage to the first electrode (the anode) 13 and a negative voltage to the second electrode (cathode) 15 the anions of the water flowing through the spacer 11 are attracted to the first electrode and the cations are attracted to the second electrode. In this way the ions (anions and cations) will be removed from the water flowing through the spacer 11. If the surface of the electrodes is saturated with ions the electrodes may be regenerated by disconnecting the potential difference. This will release the ions in the water flowing through the spacer. This will increase the ion content in the water and this water will be flushed away. Once most ions are released from the electrodes and the water with increased ion content is flushed away the electrodes are regenerated and can be used again for attracting ions.

The electrical potential differences between the anode and the cathode are rather low, for example lower than 2 Volt, preferably lower than 1,7 Volt and even more preferably lower than 1,4 Volt. It is important that the electrical resistance of the electrical circuit is sufficiently low. For this purpose, different parts of the first electrode 13 are connected to each other with the first connector 17 and different parts of the second electrode 15 are connected to each other with the second connector 19. The connectors 17, 19 are preferably made from metal, e.g. copper or stainless steel and located outside the housing to keep them dry and corrosion free. The electrodes 13, 15 may be made substantially metal free to keep them corrosion free in the wet interior of the housing and at the same time cheap enough for mass production. The electrodes 13, 15 may be produced from a current collector provided with a substantially metal free electrically conductive high surface area layer 14, or self supporting film, which may contain activated carbon or carbon aerogels on both sides which are in contact with the water. A high surface area layer is a layer with a high surface area in square meter per weight of layer material.

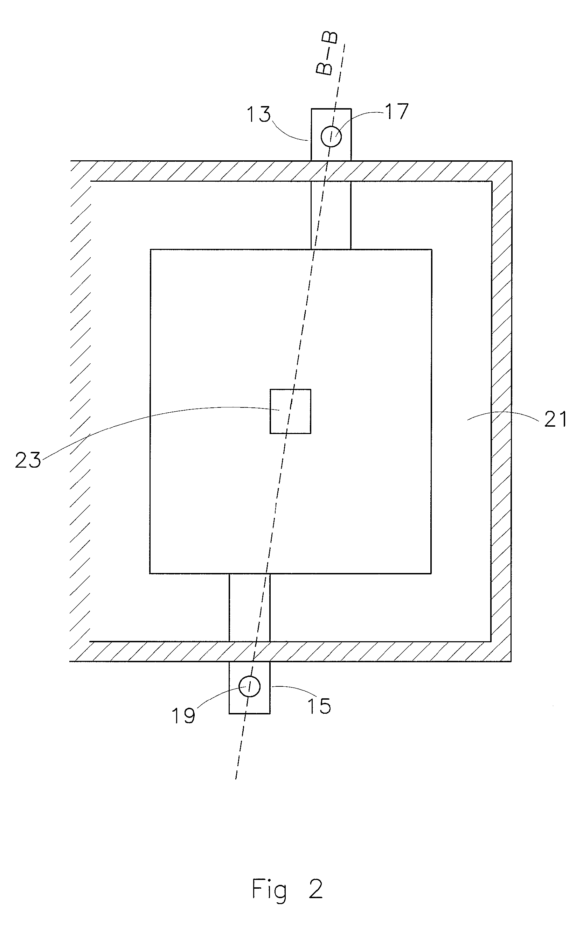

Figure 2 discloses a cross-section along the line A-A of the apparatus of figure 1. It shows the second electrode (the cathode) 15 with the second connector 19 protruding through a hole in the second electrode 15. The electrodes are provided with a space 21 for allowing water to flow through all the spacers 11 and a second passage 23 for allowing water to collect from all the spacers 11 and flow through the outlet 9. The connector 17 for connecting the parts of the first electrode 13 is also shown. Figure 1 is a cross section along the line B-B of figure 2.

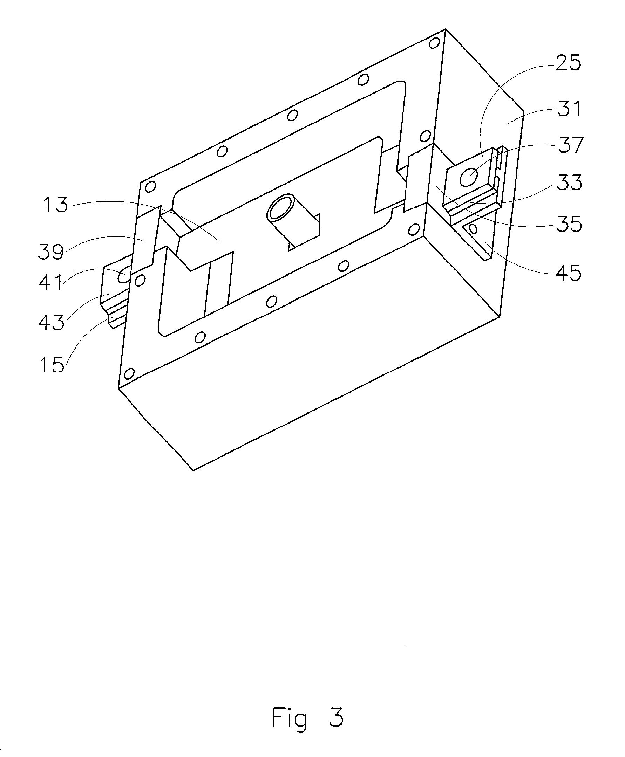

Figure 3 discloses a three dimensional figure of an apparatus for removal of ions according to the invention. It shows a top view on a plurality of electrodes 13 which are mounted in a part of a housing 31. The plurality of first electrodes 13 is fed through the housing 31 using a first feed-trough 33, which is made water tight with a first feed-through material 35. The plurality of first electrodes 13 is provided with a hole 37 for the connection of a first metal connector to the first electrodes 13. The first connector may be also be used to connect the plurality of first electrodes 13 to each other and to connect to a power source. A metal plate 25 is provided to lower the electrical resistance between the first plurality of electrodes 13 and the first connector. The plurality of first electrodes 13 may be mounted to the housing with a metal mount 45.

On the other side of the housing 31 a second plurality of electrodes 15 is fed through the housing with a second feed-through. The plurality of second electrodes are provided with a second hole 41 for connection with a second metal connector and provided with a second metal plate 43 to lower the resistance between the second electrodes and the second connector.

The electrodes (anode and or the cathode) may be made metal free by making them from carboneous material, for example activated carbon, which may be bound together in a polytetrafluoroethylene (Teflon™) matrix or carbon aerogels. The electrodes, which may be used in FTC cells may be treated with a concentrated salt solution to promote the ion removal capacity of the electrodes as well as ion conductivity and hence speed of removal.

### Electrode

The electrically conductive high surface area layer of the electrode may comprise a porous carbon layer, which can be a flexible layer, or a non flexible layer.

The carbon used in the electrode layer may comprise activated carbon, and optionally any other carboneous material, such as carbon black, carbon nanofibres grapheme or carbon nanotubes. The carbon may be chemically activated carbon but is preferably steam activated carbon. The carbon may have a high surface area of at least 500 m2/g, preferably at least 1000 m2/g, and more preferable at least 1500 m2/g. The anode and cathode may even be made out of different carboneous materials. Well known non-flexible carbon layers are made from carbon aerogels. These aerogels are often manufactured as composite paper: nonwoven paper made of carbon fibers, impregnated with resorcinol-formaldehyde aerogel, and pyrolyzed. Depending on the density, carbon aerogels may be electrically conductive, making composite aerogel paper useful for electrodes in capacitors or deionization electrodes.

The carbon may be present in the electrode in a concentration of at least 50%, preferably at least 60%, more preferable at least 70%, or even at least 75% by weight of the dry electrode. The use of thermoplastic or viscoelastic material such as latex or curable resins to form monoliths from powdered material is common. Examples of carbon layers that use Poly Fluor Tetra Etheen (PTFE) as binder material are the PACMM ™ series (from Material Methods).

One embodiment of the invention comprises an active carbon fiber woven layer or carbon cloth, e.g. the Zorflex ® range (from Chemviron Carbon).

One preferred embodiment of the invention comprises a carbon coating comprising: polyelectrolyte; binder; and, carbon, which can be coated directly onto the current collector with a method described in a patent application with application number PCT/EP2008/06 incorporated herein by reference.

### Spacer

The spacer material may comprise an, inert type material, such as an open space synthetic material and can be any material made from a polymer, plastic or fiberglass. The spacer can be a porous or non porous, woven or non woven material. The spacer may be prepared from a material that is electrically insulating, but an ionic conductor. Suitable spacers are for example the Nitex ® range or Petex ® range (from Sefar), which are open mesh fabrics or filter fabrics, made from polyamide or polyetheentereftalaat.

### Current collector

The electrode may comprise a current collector. The current collector may be made from an electrically conducting material. Suitable metal free materials are e.g. carbon, such as graphite, graphene, graphite sheets or carbon mixtures with high graphite content. It is advantageous to use a metal free electrode because metals are expensive and introduce a risk of corrosion. The current collector is generally in the form of a sheet. Such sheet is herein defined to be suitable to transport at least 33 Amps/m² and up to 2000 Amps/m². The thickness of a graphite current collector then typically becomes from 100 to 1000 micrometer, generally 200 to 500 micrometer.

### Charge barrier layer

The flow through capacitor may comprise a charge barrier. The charge barrier comprises a membrane, selective for anions or cations, which may be placed between the electrode and the spacer.. The charge barrier may be applied to the high surface area electrode layer as a coating layer or as a laminate layer.

Suitable membrane materials may be homogeneous or heterogeneous. Suitable membrane materials comprise anion exchange and/or cation exchange membrane materials, preferably ion exchange materials comprising strongly dissociating anionic groups and/or strongly dissociating cationic groups. Examples of such membrane materials are Neosepta ™ range materials (from Tokuyama), the range of PC-SA™ and PC-SK™ (from PCA GmbH), ion exchange membrane materials ex Fumatec, ion exchange membrane materials Ralex™ (from Mega) or the Excellion ™range of heterogeneous membrane material (from Snowpure).

### Stack

An FTC may comprise at least one repeating unit of:
- anionic current collector/electrode
- optionally an anion exchange membrane as charge barrier
- conventional FTC spacer
- optionally a cation exchange membrane as charge barrier
- cathode current collector/electrode.

Typically the number of repeating units in a FTC stack, as found in practice, is limited by the number of electrode layers than can be practically bundled and connected to the metal connector outside the housing. The coated electrodes have a low internal contact resistance, resulting in a lower required compression force per repeating unit. Therefore the required compression force for the same number of repeating units can be lower, or the number of repeating units in the FTC can be increased at constant compression force. It is preferred that the number of repeating units in a FTC is at least 1, preferably at least 5, more preferably at least 10, still more preferably at least 20. For practical reasons, the number of repeating units is generally not more than 200, preferably not more than 150, not more than 100, or even not more than 50.

The stack may be compressed at a pressure of less than 4 bar, preferably not more than 1.5 bar.

The electrodes can also be in the configuration of an FTC stack in spirally wound form.

The invention will now be illustrated by means of the following non-limiting examples.

### Example 1

An apparatus (FTC) for removal of ions in water with a first and second metal connector connecting parts of the first and second electrode respectively outside the housing was compared with an apparatus for ion removal of water with both connectors inside the housing. Both apparatus contained an equal amount of carbon electrode material, ion exchange membrane (Neosepta™) and spacer material (from Sefar) with 19 electrode/membrane pairs each layer having a surface area of ca. 35 cm². The FTC's were tested treating ions in the water feed stream containing NaCl at a conductivity of 1000 µS/cm at a flow rate of 100 ml min⁻¹. The purification time was 150 s, the concentration time was 60 s and the waste time was 30 s.

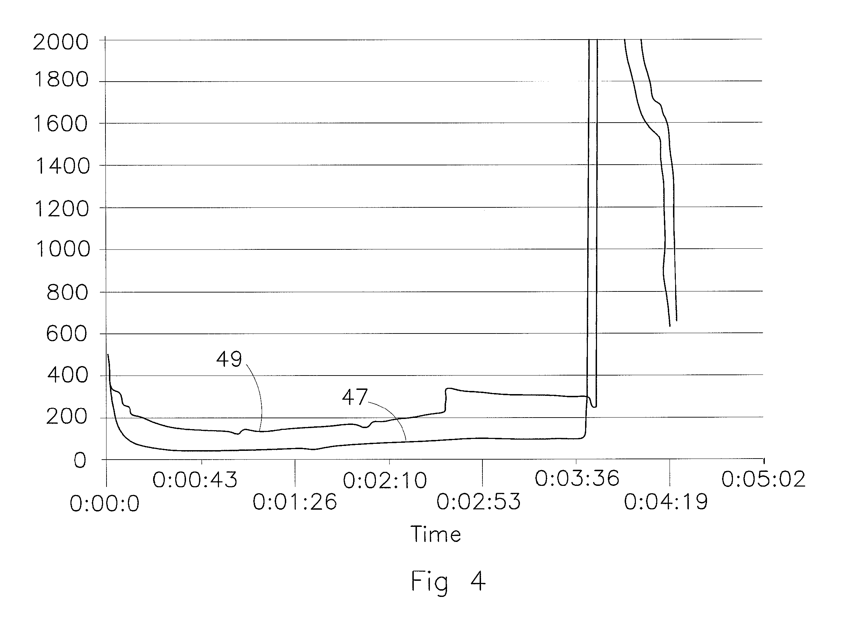

A typical cycle for the two apparatus is shown in figure 4. Line 47 indicates an apparatus for removal of ions according to the invention where the electrode is carried through the FTC cell. Line 47 shows that the water flowing out of the carry through FTC cell has a conductivity of lower than 100 micro Siemens per cm after a start up period of 20 seconds during the purification time. For comparison line 49 depicts a conventional apparatus for removal of ions with an internal connected FTC cell. During purification the conventional apparatus doesn't get the water cleaned to below a conductivity 100 micro Siemens per cm. Clearly, the FTC cell according to the present invention shows a much better desalination performance for the same amount of electrode and membrane material. This is further demonstrated by the key performance indicators shown in Table 1.

| | Internal connected FTC cell | Externally connected FTC cell |
|---|---|---|
| Average ions removal efficiency [%] | 83 | 94 |
| Amount of NaCl removed [mmol] | 1.79 | 1.96 |
| Minimal conductivity during purification step [µS/cm] | 126 | 44 |

### Example 2:

An apparatus for removal of ions according to the invention was compared to a conventional apparatus for removal of ions. Both apparatus comprises the same amount of carbon electrode material, ion exchange membrane (Neosepta™) and spacer material (from Sefar) with 17 electrode/membrane pairs each layer having a surface area of ca. 35 cm². The conventional apparatus was provided with a stainless steel electrical internal connection inside the housing of the FTC cell. The apparatus according to the invention was provided with the electrodes passing through the housing and connected to the metal connector outside the housing. Both apparatus were first tested under standard conditions treating a feed stream containing NaCl at a conductivity of 500 µS/cm at a flow rate of 100 ml min⁻¹. The purification time was 60 s, the concentration time was 5 s and the waste time was 10 s. The desalination performance results of both apparatus are shown in table 2. Both apparatus were subsequently run treating tap water (500 µS/cm, 16°FH) at a flow rate of 100 ml min⁻¹ using the cycle described above for a period of 20 days. After the 20 days both apparatus were again tested at the standard conditions described above treating a 500 µS/cm NaCl solution. The desalination performance results of both used apparatus are shown in table 2.

After this test the interior of the cells was assessed and the stainless steel connections in the conventional apparatus showed severe corrosion whereas the apparatus according to the invention was free of any form of material degradation. Both cells were subsequently flushed with a dilute solution (0.01 M) of phosphoric acid for 24 h and subsequently tested again under the standard conditions to observe the effect of the phosphoric acid. The desalination performance results of both apparatus after the acid flush are shown in table 2.

**Table 2:**

| | FTC cell | | | Internally connected FTC cell | | |
|---|---|---|---|---|---|---|
| | New | Used | After acid flush | New | Used | After acid flush |
| Average purified ion removal [%] | 100 | 94 | 95 | 100 | 58 | 97 |

Clearly, the use of cost effective construction materials like stainless steel for the electrical connections inside the housing of an FTC cell of a conventional apparatus leads to formation of corrosion on the electrodes which reduces the desalination performance and robustness of the apparatus. It is demonstrated that FTC cells according to the present invention offer a cost effective solution for this problem by having the connector outside the housing.

While specific embodiments of the invention have been described above, it will be appreciated that the invention may be practiced otherwise than as described. For example, the invention may take the form of a computer program containing one or more sequences of machine-readable instructions describing a method as disclosed above, or a data storage medium (e.g. semiconductor memory, magnetic or optical disk) having such a computer program stored therein.

The descriptions above are intended to be illustrative, not limiting. Thus, it will be apparent to one skilled in the art that modifications may be made to the invention as described without departing from the scope of the claims set out below.

## Claims

1. An apparatus for removal of ions, the apparatus being provided with a housing comprising:
a water inlet for letting water in the housing;
a water outlet for letting water out of the housing;
a first electrode comprising a first current collector with a substantially metal free high surface area layer;
a second electrode;
a spacer for separating the first electrode from the second electrode and allowing water to flow in between the first and second electrode; and,
a first metal connector connected to the first current collector, wherein the first current collector is fed through the housing to connect to the first metal connector outside the housing.

2. The apparatus according to claim 1, wherein the first electrode is the anode.

3. The apparatus according to claim 1, wherein the second electrode is the cathode.

4. The apparatus according to claim 1, wherein the second electrode comprises a second current collector with a metal free high surface area layer.

5. The apparatus according to any of the preceding claims, wherein at least one of the first and second electrode is substantially metal free.

6. The apparatus according to any of the preceding claims, wherein at least one of the first and second electrode comprises a carboneous material.

7. The apparatus according to any of the preceding claims, wherein the high surface area electrode comprises a carboneous material.

8. The apparatus according to claim 6 or 7, wherein the carboneous material comprises graphene, graphite or graphite sheet.

9. The apparatus according to claim 1, wherein the apparatus is provided with a power source for providing an electrical potential of less than 2 Volts, preferably of less than 1,7 Volts, more preferably less than 1,4 Volts between the first and second electrode.

10. The apparatus according to claim 1, wherein the first metal connector comprises copper, nickel, titanium, messing or stainless steel.

11. The apparatus according to claim 1, wherein the apparatus is constructed and arranged so that the water flows from the inlet to the outlet through the spacer separating the first electrode from the second electrode.

12. The apparatus according to claim 1, further comprising a charge barrier layer between one of the first and second electrode and the spacer, the charge barrier layer being provided with a membrane selective for anions and/or cations

13. A method for removal of ions the method comprising:
providing at least one of a first and a second electrode in a housing, the first electrode comprising a first current collector with a substantially metal free high surface area layer;
allowing water to enter the housing via the water inlet; and,
allowing the water to flow in between the first and second electrodes to a water outlet; and, connecting said one of the first and second electrode via a metal connector outside the housing to a power source so as to charge the electrodes.

14. The method according to claim 13, wherein the power source provides an electrical potential difference of less than 2 Volts, preferably of less than 1,7 Volts, more preferably less than 1,4 Volts between the electrodes.

15. An apparatus for removal of ions, the apparatus being provided with a housing comprising:
a water inlet for letting water in the housing;
a water outlet for letting water out of the housing;
a first electrode;
a second electrode;
a spacer for separating the first electrode from the second electrode and allowing water to flow in between the first and second electrode; and,
a first metal connector connecting to the first electrode, wherein the interior of the housing is substantially metal free.
